# EUROPEAN PATENT SPECIFICATION

(11) **EP 1 955 450 B1**
(45) Date of publication and mention of the grant of the patent: **21.08.2013**
(21) Application number: 06823805.4
(22) Date of filing: 29.11.2006
(51) Int. Cl.: H04B 7/26, H04L 29/06

(54) **LOCATION INFORMATION SYSTEM AND METHOD FOR PERFORMING NOTIFICATION BASED UPON LOCATION**
LOKALISIERUNGSINFORMATIONSSYSTEM UND VERFAHREN ZUR DURCHFÜHRUNG EINER BENACHRICHTIGUNG AUF DER BASIS DER LOKALISIERUNG
SYSTEME D'INFORMATION DE LOCALISATION ET PROCEDE DE NOTIFICATION D'APRES LA LOCALISATION

(30) Priority: 01.12.2005 US 741064 P; 14.07.2006 KR 20060066572; 09.11.2006 KR 20060110602
(43) Date of publication of application: 13.08.2008
(73) Proprietor: LG Electronics Inc., Yongdungpo-gu Seoul 150-010 (KR)
(72) Inventor: SHIM, Dong-Hee, Seoul, 150-853 (KR)
(74) Representative: Urner, Peter
(86) International application number: PCT/KR2006/005097
(87) International publication number: WO 2007/064147

(56) References cited:
- EP-A1- 1 589 350
- EP-A2- 1 387 590
- WO-A1-03/045099
- WO-A1-2006/014091
- WO-A1-2006/118373
- JP-A- 2006 079 249
- US-A1- 2005 250 516
- US-A1- 2005 250 516
- US-B1- 6 463 289
- Donghee Shim, LG Electronics Inc., Julien Grange, Orange SA: "Notification based on current location for SUPL 2.0"[Online] 10 October 2005 (2005-10-10), pages 1-4, XP002604396 Open Mobile Alliance Retrieved from the Internet: URL:http://member.openmobilealliance.org/f tp/Public_documents/LOC/2005/> [retrieved on 2010-10-11]
- DONGHEE SHIM, LG Electronics Inc. , Julien Grange, Rachid Oulahal, Orange SA: "Use case for notification based on current location for SUPL 2.0"[Online] 21 September 2005 (2005-09-21), pages 1-3, XP002604483 Open Mobile Alliance Retrieved from the Internet: URL:http://member.openmobilealliance.org/f tp/Public_documents/LOC/2005/> [retrieved on 2010-10-11]
- LG Electronics, Inc.: "Notification based on current location of target UE"[Online] 3 May 2005 (2005-05-03), - 13 May 2005 (2005-05-13) pages 1-41, XP002604484 Athens 3GPP TSG-SA WG2 Meeting 46, (Tdoc S2-05987) Retrieved from the Internet: URL:http://www.3gpp.org/ftp/tsg_sa/WG2_Arc h/TSGS2_46_Athens/Docs/> [retrieved on 2010-10-11]
- "Secure User Plane Location Architecture, Candidate Version 1.0" ANNOUNCEMENT OPEN MOBILE ALLIANCE, XX, XX, vol. V1 0-20051121-C, 21 November 2005 (2005-11-21), pages 1-80, XP003013365
- 3GPP: "3GPP TS 23.271 V7.2.0; 3rd Generation partnership project; Technical specification group services and system aspects; Functional stage 2 description of Location Services (LCS) (Release 7)"[Online] 4 October 2005 (2005-10-04), pages 1-122, XP002604508 3GPP Retrieved from the Internet: URL:http://www.3gpp.org/ftp/Specs/2005-09/ Rel-7/23_series/23271-720.zip> [retrieved on 2010-10-11]
- "3rdGeneration Partnership Project; Technical Specification Group Services and System Aspects System Aspects; Technical Report Enhanced support for User Privacy in location services (Release 5); 3GPP TR 23.871" ETSI STANDARDS, LIS, SOPHIA ANTIPOLIS CEDEX, FRANCE, no. V5.0.0, 1 July 2002 (2002-07-01), XP014021953 ISSN: 0000-0001
- DONGHEE SHIM; LG Electronics Inc; Julien Grange; Orange SA: "Notification based on current location"[Online] 3 December 2005 (2005-12-03), pages 1-4, XP002604914 Open Mobile Alliance Retrieved from the Internet: URL:http://member.openmobilealliance.org/f tp/Public_documents/LOC/2005/> [retrieved on 2010-10-11]
- 'Secure User Plane Location Architecture, Candidate Version 1.0' OMA (OPEN MOBILE ALLIANCE), [Online] 21 November 2005, pages 26 - 48, XP003013365 Retrieved from the Internet: <URL:http://www.member.openmobilealliance.o rg/ftp/Public_documents/LOC/Permanent_docum ents/OMA-AD-SUPL-V1_0-20051121-C.zip>

## Description

### Technical Field

The present invention relates to a location information system, and more particularly, to a location information system and method for performing a notification based upon location in a Secure User Plane Location (SUPL) network.

### Background Art

In general, in order to provide location services to a user, considerable signaling and location information should be transferred between a mobile terminal and a location server. The so-called positioning technologies have been standardized for providing such location services, for example, a location service based upon the location (position) of a mobile device, are undergoing rapid widespread dissemination.

The positioning technologies can be provided through a user plane and a control plane. A Secure User Plane Location (SUPL) which is well-known as an example of the positioning technologies provides the location services through the user plane.

The SUPL technology is an efficient method for transferring location information required for the location calculation (i.e., positioning) of a mobile station. The SUPL employs a user plane data bearer so as to transfer positioning assistance information such as Global Positioning System (GPS) assistance, and to carry positioning technology associated protocols between the mobile terminal and a network.

In general, a SUPL network associated with location services in the location information system includes a SUPL agent, a SUPL Location Platform (SLP) and a SUPL Enabled Terminal (SET). The SUPL agent refers to a logical service access point using location information which is actually measured. The SLP refers to a SUPL service access point at a network portion where network resources are accessed to obtain location information. The SET refers to a device for communicating with the SUPL network using a SUPL interface, for instance, a User Equipment (UE) of the UMTS, a Mobile Station (MS) of GSM, a IS-95 MS, laptop computers or Personal Digital Assistants (PDAs) which have a SET function, or the like. The SET may also be one of various mobile terminals which is connected through a Wideband LAN (WLAN). The SET supports various procedures defined by the SUPL by being connected to the network via the user plane bearer.

In a mobile communications system such as the location information system, many terminal users desire that different privacy policies be applied according to the current locations of their terminals. That is, a user may want to receive a positioning request notification based on a current location of his terminal so as to restrict the accessing of location information by a third party. For instance, positioning of his terminal can be granted when at home, but may require positioning request notification be performed when he is at work in his office.

Thus, privacy rules may be applied differently according to the user who requests positioning and a location of the SET (e.g., home, office, etc.) in a location information system, for example, a SUPL network. Therefore, if the SET is located within a specific area, before the location of the SET is reported to a user (a third party) who requests positioning, a location server performs an appropriate privacy checking procedure according to the corresponding user and the location of the SET. Preferably, the SET, being a device capable of communicating with the SUPL network, may be one of a User Equipment (UE) of the UMTS, a Mobile Station (MS) of GSM, a IS-95 MS, or the like. In the present invention, the SET will be simply referred to as a terminal.

However, the notification by the location server is simply requested by transmitting a notification element to the SET regardless of the user or location of the SET. Accord ingly, there is no way for the SET side to recognize whether the corresponding notification request is performed based upon the location (or based on the user), which results in an unstable system due to an unclear time point of a notification response from the SET. In a SUPL network stricture, only the functions of each SUPL device have been suggested thus far, while a signal transfer system between each SUPL device for transferring location information is still being discussed. Accordingly, needs for the signal transfer system are more brought out.

Donghee Shim, LG Electronics Inc., Julien Grange, Orange SA: "Notification based on current location for SUPL 2.0", 10 October 2005 (2005-10-10), pages 1 to 4, XP002604396, specifies a call flow to realize the notification based on current location for non-roaming successful case - proxy mode.

Donghee Shim, LG Electronics Inc., Julien Grange, Rachid Oulahal, Orange SA: "Use case for notification based on current location for SUPL 2.0", 21 September 2005 (2005-09-21), pages 1 to 3, XP002604483, considers cases where the user could request to have his privacy management based on his current location so that different privacy rules are applied depending on the current location (home, office, roaming). Therefore, the user has to be located first and, depending on his location, the appropriate privacy checking is performed. In all cases, as part of his privacy options, the user can request to be notified before his location is sent to the requesting entity. Also, the user can indicate that his consent shall be explicitly given before the release of his location to the requesting entity.

LG Electronics, Inc.: "Notification based on current location of target UE", 3 May 2005 (2005-05-03) to 13 May 2005 (2005-05-13) pages 1 to 41, XP002604484, Athens 3GPP TSG-SA WG2 Meeting 46, (Tdoc S2-05987), discloses that users demand different privacy policies to be applied depending on the current location of UE. In other words, a User may want notification of the positioning attempt based on the current location of target UE. For example, at home a User would allow the positioning of his/her UE, however, at the office, a User may want notification of the request. Under these conditions, an application that is granted conditional reporting authorization must notify and obtain reporting authorization from the User of target UE after performing positioning but prior to reporting the location of target UE. Thus, the User of the target UE shall be given an opportunity to accept or reject the positioning attempt only when the user is at chosen locations(s) that are specified in the users privacy profile. In these circumstances, the User will have to be located first and an additional privacy checking on his/her location will be performed. This additional privacy check may result in the user being notified before his location is sent to the requesting entity.

### Disclosure of Invention

### Technical Problem

Therefore, it is an object of the present invention to provide a location information system and method by which a terminal can identify a type of notification performed by a location server.

### Technical Solution

Objects of the present invention an achieved by subject matters of the independent claims. According to an embodiment of the present invention, a location based notification method m a mobile communications system comprises : receiving a session initial message including a notification mode parameter (indicator) from a location server; and checking the received notification mode parameter so as to determine whether the notification is performed based upon the location of the SET.

Preferably, the notification mode parameter indicates whether a notification/verification by the location server is a normal notification/verification or a notification/ verification based upon location.

Preferably, if the notification mode parameter is the notification/verification based upon the location, the terminal does not transmit a session end message until it receives a session notification message.

Preferably, if the notification/verification is not based upon the location of the terminal, the terminal transmits the session end message to the location server.

According to an embodiment of the present invention, a mobile communications terminal adapted to a location information system according to the present invention comprises: a Radio Frequency (RF) unit for receiving a session initial message including a notification mode parameter from a location server; and a signal processing unit (processor) for checking the received notification mode parameter so as to determine whether the notification is performed based upon the location of the terminal.

Preferably, the notification mode parameter indicates whether a notification/verification performed by the location server is a normal notification/and verification or a notification/verification based upon location.

Preferably, the signal processing unit does not transmit a session end message until it receives a session notification message when the notification mode parameter is a notification/verification based upon the location.

Preferably, the signal processing unit transmits the session end message to the location server when the notification/verification is not performed based upon the location of the terminal.

### Brief Description of the Drawings

Fig. 1 illustrates a first embodiment of a location based notification method in a location information system according to the present invention, which illustrates a case that a terminal is not roaming in a proxy mode.

Fig. 2 illustrates a second embodiment of a location based notification method in a location information system according to the present invention, which illustrates a case that a terminal is roaming in a proxy mode.

Fig. 3 illustrates a third embodiment of a location based notification method in a location information system according to the present invention, which illustrates a case that a terminal is roaming in a proxy mode.

Fig. 4 illustrates a fourth embodiment of a location based notification method in a location information system according to the present invention, which illustrates a case that a terminal is not roaming in a non-proxy mode.

Fig. 5 illustrates a fifth embodiment of a location based notification method in a location information system according to the present invention, which illustrates a case that a terminal is roaming in a non-proxy mode.

Fig. 6 illustrates a sixth embodiment of a location based notification method in a location information system according to the present invention, which illustrates a case that a terminal is roaming in a non-proxy mode.

Fig. 7 illustrates a schematic structure of a mobile communications terminal adapted to a location information system according to the present invention.

### Mode for the Invention

The present invention may be implemented for a SUPL network. However, the present invention may be applicable to radio (wireless) communications systems which are operated according to other specifications. Hereinafter, reference will be made in detail to the preferred embodiments of the present invention.

In the present invention, when an application (i.e., a server system) transmits a positioning request made by a third party (i.e., a client system) to a terminal (or a User Equipment (UE)), the application transmits it together with a notification mode parameter (indicator), which allows the terminal to check the received notification mode parameter to thusly determine whether the notification is performed based upon the location of the terminal. If it is checked the notification is performed based upon the location of the terminal, the terminal maintains a session with the terminal until an actual notification element is transmitted from the location server after positioning. If the notification is not performed based upon the location of the terminal, the terminal transmits a session end message to the location server.

For this, in the present invention, when a Location Services (LCS) client requests positioning of a target SUPL Enabled Terminal (SET), a SUPL Location Platform (SLP) within the location server transmits to the SET a SUPL initial (SUPL INIT) message which includes the notification mode parameter. Preferably, the notification mode parameter denotes a parameter indicating whether a notification and/or verification transmitted from the location server is a normal notification/verification or a notification/verification based upon location.

In general, in a SUPL network, a SLP which is a location server is constituted with a SUPL Positioning Center (SPC) which is an entity for calculating an actual location and a SUPL Location Center (SLC) which manages other functions of the SLP excepting the calculating of the location information, for instance, roaming, resource managing, and the like. Therefore, the SET calculates location information through a communication with the SPC via the SLC in case of a proxy mode, while calculating location information by performing a direct connection to the SPC in case of a non-proxy mode.

Hereinafter, the location based notification method in a location information system according to the present invention will be explained based upon a proxy mode and a non-proxy mode.

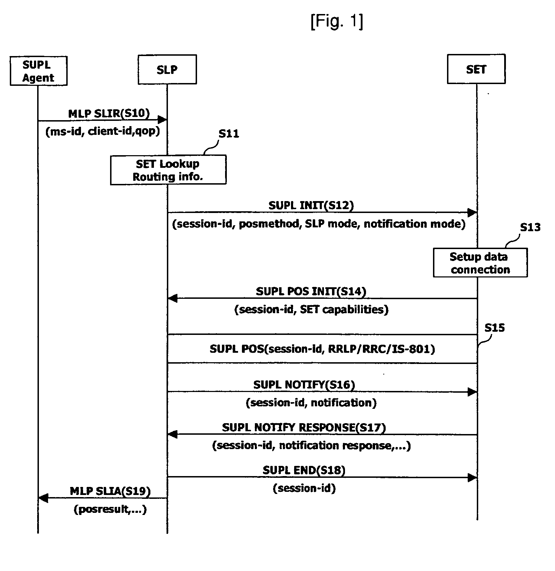

Fig. 1 illustrates a first embodiment of a location based notification method in a location information system according to the present invention, which illustrates a case that the terminal is not roaming in a proxy mode. Here, the SLP corresponds to a network side and the SET corresponds to a terminal side.

As illustrated in Fig. 1, when a LCS client requests positioning of the SET from a SUPL agent within a network, the SUPL agent transfers the positioning request made by the LCS client to the SLP through a Mobile Location Protocol (MLP) Standard Location Immediate Request (SLIR) message (S10). The MLP SLIR message may include ms-id, les-client-id, QoP (Quality of Position), and the like.

The SLP checks whether the SUPL agent is authenticated (authorized) for location services based upon the received lcs-client-id. The SLP then performs a privacy checking procedure based upon the ms-id and the les-client-id, namely, checks from an external Privacy Checking Entity (PCE) whether the LCS client is granted for the positioning based upon the ms-id and the lcs-client-id. The SLP can perform the privacy checking by requesting to the PCE or by directly receiving privacy information from the PCE. Also, the SLP checks whether a previously computed location of the SET satisfies a required QoP.

According to the checked results, if the previously computed location of the SET satisfies the required QoP and any notification and/or verification is not needed to be performed, the SLP directly proceeds to the step of S 19 to thusly transfer the previously computed location value of the SET to the SUPL agent.

Conversely, if the previously computed SET location does not satisfy the required QoP and a notification and/or verification is needed to be performed, the SLP determines whether the SET supports the SUPL using a SET lookup table, and checks (confirms) whether the SET currently belongs to a service area (i.e., whether the SET is roaming) using routing information (S 11).

Upon completing the checking of the SUPL agent authentication (authorization) and the privacy checking of the LCS client, the SLP transmits a session initial (i.e., SUPL INIT) message to the SET to thus initiate a positioning session with the SET (S12). The SUPL INIT message may be a WAP PUSH or an SMS trigger, and include at least parameters, such as session-id, positioning methods(posmethod), SLP modes (i.e., proxy/ non-proxy), notification mode, and the like.

The notification mode parameter is used to allow a SET side to identify that the notification transmitted from the SLP is performed based upon location. That is, so far, the SET could not identify whether the notification transmitted from the SLP indicates a normal notification or a notification based upon location. Hence, when the SLP requests a notification, the SET queries to a SET user regardless of types of notification/verification and thereafter transmits the response result of the querying immediately to the SLP.

However, when the notification request made by the location server is a notification based upon the location, the SET should not immediately transmit the notification response to the SLP but transmit it after performing a SUPL positioning process.

Preferably, the normal notification/verification indicates a notification/verification other than the notification/verification based upon the location, for example, a notification/verification based upon a user.

The definition and type of the notification mode parameter has been illustrated in [Table 1] as follows.

**Table 1**

| Parameter | Presence | Values/description |
|---|---|---|
| Notification Mode | - | Describes the mode whether the notification and Verification is based on location or not.This parameter can be of type- Normal Notification/ Verification- Notification/Verification based on location |

Referring to [Table 1], a type of the notification mode parameter is set to a normal notification/verification or a notification/verification based upon location. The normal notification/verification is set to "0" and the notification/verification based upon location is set to "1". Also, when the notification or verification is required to be performed according to the result of the privacy checking, the SLP may include a notification mode parameter in the SUPL INIT message.

When the SUPL INIT message is received from the SLP, the SET is connected to packet data network (e.g., a 3GPP or 3GPP2 network) when data connection is currently not opened (set) to any network (S 13). Once completing the data connection setup, the SET checks whether the notification is performed based upon location using the notification mode parameter included in the SUPL INIT message.

According to the checked result, if the notification performed by the SLP is not based upon the location, the SET queries to the SET user as to whether to grant permission for positioning according to notification rules. If the user grants permission for the positioning, the SET transmits a SUPL POS INIT message to the SLP, and, if not, the SET transmits to the SLP a session end (i.e., SUPL END) message (not shown) which includes the user's notification response. Conversely, if the notification is performed based upon the location, the SET transmits to the SLP a SUPL POS INIT message which does not include any notification response (i.e., holds the notification response), to thus initiate a positioning session with the SLP (S 14).

The SUPL POS INIT message may include at least session-id, SET capabilities and location identifier (lid). The SET capabilities may include location measuring (positioning) methods (e.g., MS assisted A-GPS, MS based A-GPS, and cell-id method) and associated location measuring (positioning) protocols (e.g., RRLP, RRC, and TIA-801). Also, the SET can further provide NMR for radio technologies (e.g., GSM: TA, and RXLEV) to be used.

When the SUPL POS INIT message is received from the SET, the SLP determines which positioning protocol (RRLP, RRC, and TIA-801) should be used based upon the positioning method (posmethod) supported by the SET.

Therefore, the SLP and the SET sequentially exchange several successive positioning procedure message (RRLP, RRC, and T1A-801) to calculate the location of the SET (S 15). The location is calculated based upon measurements that the SLP has received from the SET (MS assisted), or assistance that the SET has obtained from the SLP (MS based).

When the SUPL positioning process is completed, the SLP checks whether to grant permission for positioning of a user who has requested the positioning on the calculated location of the SET by directly requesting to the PCE or by using privacy information received from the PCE. According to the checked result, when a notification to the SET user is required to be performed (i.e., when positioning of the SET is conditionally granted), the SLP transmits a session notification (SUPL NOTIFY) message including a notification element to the SET (S16). Preferably, the SUPL NOTIFY message may include session-id and a notification parameter.

When receiving the SUPL NOTIFY message, the SET recognizes that the notification by the SLP is performed based upon location. The SET then queries to the SET user as to whether the location value of the SET should be transmitted, and thereafter transmits a notification response of the SET user to the SLP through a session notification response (i.e., SUPL NOTIFY RESPONSE) message (S 17). Preferably, the SUPL NOTIFY RESPONSE message may include session-id and a notification response parameter. The definition and type of the notification type parameter has been shown in [Table 2] as follows.

**Table 2**

| Parameter | Presence | Value/description |
|---|---|---|
| Notification Response | - | Describes the mode whether the notification/verification response from the user |
| Notification Response type | M | Type of notification response:- Allowed- Not allowed |

Hence, upon completely calculating the location of the SET, the SLP transmits a SUPL END message to the SET to inform that the positioning process is not initiated any more (S18). Also, when the user's notification response included in the SUPL NOTIFY RESPONSE message is set to "allowed" namely, if the SET user grants permission for transmitting of the positioning resultant value (i.e., the calculated current location of the SET), the SLP transmits a MLP Standard Location Immediate Answer (SLIA) message including the location value of the SET to the SUPL agent (S19).

As aforementioned, the present invention can transmit to the SET the notification mode parameter through the SUPL INIT message so as to allow the SET to identify whether the notification/verification transmitted from the SLP is the normal notification/verification (i.e., the notification/verification based upon a user) or a notification/verification based upon location.

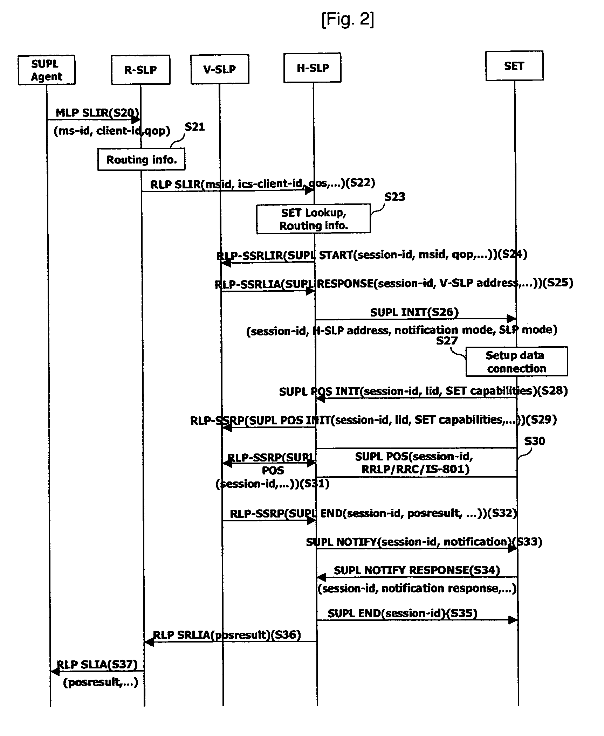

Fig. 2 illustrates a second embodiment of a location based notification method in a location information system according to the present invention, which illustrates a case that the terminal is roaming in a proxy mode. Here, a H-SLP denotes a SLP within a home network, and a V-SLP denotes a SLP within a visited network. Also, a Requesting SLP (R-SLP) denotes a SLP to which an external client is initially connected when initiating a SUPL procedure in a network.

The second embodiment of the present invention shown in Fig. 2 is the same as the first embodiment of the present invention excepting those fact that the H-SLP receives a positioning request from the SUPL agent via the R-SLP, and RLP protocol messages are used such that messages are exchanged between the V-SLP and the H-SLP to thus initiate a SUPL session, transfer positioning session and inform the starting of the SUPL positioning process. Especially, the second embodiment of the present invention may be applied when the V-SLP performs positioning with the SET.

As illustrated in Fig. 2, the SUPL agent requests positioning of the LCS client from the R-SLP through a MLP SLIR message (S20). The MLP SLIR message may include ms-id, lcs-client-id, Quality of Position (QoP), and the like.

When receiving the MLP SLIR message, the R-SLP checks whether the SUPL agent is authorized for location services based upon the lcs-client-id, and determines a H-SLP based upon the ms-id. Also, the R-SLP checks whether the SET currently belongs to a service area (i.e., whether the SET is roaming) using routing information (S21). Upon the completion of such series of operations, the R-SLP transfers the request for the positioning of the LCS client to the H-SLP using a RLP protocol message (i.e., RLP SLIR) (S22).

The H-SLP performs a privacy checking based upon the ms-id and the lcs-client-id, and determines whether the SET supports the SUPL using a SET lookup table. The H-SLP then determines whether the SET is currently located within a service area (i.e., whether the SET is roaming) using routing information (S23).

If it is determined that the SET supports the SUPL and is roaming, the H-SLP transmits a RLP-SSRLIR message to the V-SLP to inform that the SET is to initiate the SUPL positioning process (S24). The V-SLP informs the H-SLP that the SUPL positioning process is ready to be initiated through a RLP-SSRLIA message (S25). The RLP-SSRLIR message may include at least session-id, ms-id and QoP, and the RLP-SSRLIA message may include at least session-id, and a V-SPC address.

Therefore, the H-SLP transmits a SUPL INIT message to the SET to initiate a positioning session with the SET (S26). The SUPL INIT message may be a WAP PUSH or an SMS trigger, and include at least session-id, positioning methods (posmethod), SLP mode (proxy/non-proxy), a notification mode, and the like.

When receiving the SUPL INIT message from the H-SLP, the SET is connected to packet data network (e.g., a 3GPP or 3GPP2 network) when data connection is currently not opened (set) to any network (S27). Once completing the data connection setup, the SET queries to a SET user as to whether to grant permission for positioning according to notification rules, and checks whether the notification is performed based upon a location of the SET using the notification mode parameter value included in the SUPL INIT message.

If it is checked that the notification performed by the SLP is not based upon the location of the SET, the SET transmits a SUPL POS INIT message including a notification response of the SET user to the H-SLP to initiate a positioning session with the H-SLP. If it is checked that the notification performed by the SLP is based upon the location of the SET, the SET transmits to the H-SLP a SUPL POS INIT message which does not include a notification response to thusly start the positioning session with the H-SLP (S28). The SUPL POS INIT message may include at least session-id, SET capabilities and a location identifier (lid). The SET capabilities may include location measuring (positioning) methods (e.g., MS assisted A-GPS, MS based A-GPS, and cell-id method) and associated location measuring (positioning) protocols (e.g., RRLP, RRC, and TIA-801).

When the SUPL POS INIT message is received from the SET, the H-SLP transfers the SUPL POS INIT message to the V-SLP through a RLP-SSRP message (S29). The V-SLP then determines which positioning protocol (RRLP, RRC, and T1A-801) should be used based upon the positioning method (i.e., posmethod) supported by the SET.

Therefore, the V-SLP and the H-SLP sequentially exchange several successive positioning procedure message (RRLP, RRC, and T1A-801) to calculate the location of the SET (S30 and S31). The location is calculated based upon measurements that the V-SLP has received from the SET (MS assisted), or assistance that the SET has obtained from the V-SLP (MS based).

When the SUPL positioning process is completed, the V-SLP transmits a SUPL END message including the calculated location value of the SET through the RLP-SSRP message (S32). The H-SLP checks whether to grant permission for positioning of the user who has requested the positioning on the calculated location of the SET by directly requesting to the PCE or by using privacy information received from the PCE.

According to the checked result, when a notification to the SET user is needed to be performed (i.e., when the positioning of the SET is conditionally granted), the H-SLP transmits a SUPL NOTIFY message including a notification element to the SET (S33). When receiving the SUPL NOTIFY message from the H-SLP, the SET recognizes that the notification performed by the H-SLP is a notification based upon location. Accordingly, the SET queries to the SET user as to whether the location value of the SET should be transmitted, and thereafter transmits a notification response of the SET user to the H-SLP through a SUPL NOTIFY RESPONSE message (S34).

Thus, the H-SLP transmits a SUPL END message to the SET to inform that the positioning process is not initiated any more (S35). Also, when the user's notification response included in the SUPL NOTIFY RESPONSE message is set to "allowed" namely, if the SET user grants permission for transmitting of the positioning resultant value (i.e., the calculated current location of the SET), the H-SLP transmits a MLP SRLIA message including the location value of the SET to the R-SLP (S36). The R-SLP finally transmits a MLP SLIA message including the location value of the SET to the SUPL agent (S37).

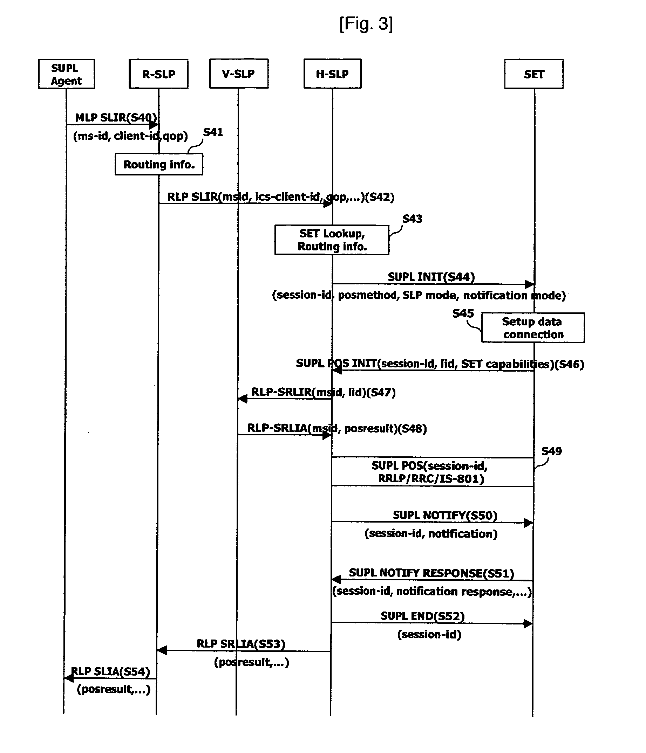

Fig. 3 illustrates a third embodiment of a location based notification method in a location information system according to the present invention, which illustrates a case that a terminal is roaming in a proxy mode. The third embodiment of the present invention is the same as the second embodiment of the present invention excepting the fact that the H-SLP performs positioning with the SET.

First, the SUPL agent transfers a request for positioning of the LCS client to the RSLP through a MLP SLIR message (S40). The R-SLP checks whether the SUPL agent is authorized for location services based upon lcs-client-id, and determines the H-SLP based upon ms-id. The MLP SLIR message may include ms-id, lcs-client-id and QoP. Also, the R-SLP checks whether the SET currently belongs to a service area (i.e., whether the SET is roaming) using routing information (S41).

Upon completing such series of operations, the R-SLP transfers the request for the positioning of LCS client using the RLP protocol message (i.e., RLP SLIR) (S42). The H-SLP performs a privacy checking based upon the ms-id and the lcs-client-id, and determines whether the SET supports the SUPL using the SET lookup table. The H-SLP then determines whether the SET is currently located within a service area (i.e., whether the SET is roaming) using routing information (S43).

If it is determined that the SET supports the SUPL and is roaming, the H-SLP transmits a SUPL INIT message to the SET to initiate a positioning session with the SET (S44). The SUPL INIT message may be a WAP PUSH or an SMS trigger, and include at least session-id, positioning methods (posmethod), SLP mode (proxy/non-proxy), a notification mode, and the like.

When receiving the SUPL INIT message from the H-SLP, the SET is connected to a packet data network (e.g., a 3GPP or 3GPP2 network) when data connection is currently not opened (set) to any network (S45). Once completing the data connection setup, the SET queries to a SET user as to whether to grant permission for positioning according to notification rules, and checks whether the notification is performed based upon a location of the SET using the notification mode parameter value included in the SUPL INIT message.

If it is checked that the notification performed by the SLP is not based upon the location of the SET, the SET transmits a SUPL POS INIT) message including a notification response of the SET user to the H-SLP to start the positioning session with the H-SLP. If it is checked that the notification performed by the SLP is based upon the location of the SET, the SET transmits to the H-SLP a SUPL POS INIT message which does not include a notification response to thusly start the positioning session with the H-SLP (S46). The SUPL POS INIT message may include at least session-id, SET capabilities and a location identifier (lid). The SET capabilities may include location measuring (positioning) methods (e.g., MS assisted A-GPS, MS based A-GPS, and cell-id method) and associated location measuring (positioning) protocols (e.g., RRLP, RRC, and TIA-801).

When the SUPL POS INIT message is received from the SET, the H-SLP transfers a RLP-SRLIR message including the ms-id and the location identifier (lid) thus to allow the V-SLP to calculate a coarse location of the SET (S47). The V-SLP calculates the coarse SET location using the location identifier (lid) and thereafter transfers the calculated coarse location of the SET through a RLP SRLIA message (S48).

If the coarse location of the SET satisfies the QoP required by the client, the H-SLP proceeds to the step S53. If not, the H-SLP determines which positioning protocol (RRLP, RRC, and TIA-801) should be used based upon the positioning method (posmethod) supported by the SET.

Therefore, the H-SLP and the SET sequentially exchange several successive positioning procedure message (RRLP, RRC, and T1A-801) to calculate the location of the SET (S49). The location is calculated based upon measurements that the H-SLP has received from the SET (MS assisted), or assistance that the SET has obtained from the V-SLP (MS based).

When the SUPL positioning process is completed, the H-SLP checks whether to grant permission for positioning of a user who has requested the positioning on the calculated location of the SET by directly requesting to the PCE or by using privacy information received from the PCE. According to the checked result, when a notification to the SET user is required to be performed (i.e., when positioning of the SET is conditionally granted), the H-SLP transmits a SUPL NOTIFY message including a notification element to the SET (S50). When receiving the SUPL NOTIFY message from the H-SLP, the SET recognizes the notification by the SLP is a notification based upon location. The SET then queries to the SET user as to whether the SET location value should be transmitted, and thereafter transmits a notification response of the SET user to the H-SLP through a SUPL NOTIFY RESPONSE message (S51).

Accordingly, the H-SLP transmits a SUPL END message to the SET to inform that the positioning process is not initiated any more (S52). Also, when the user's notification response included in the SUPL NOTIFY RESPONSE message is set to "allowed" namely, if the SET user grants permission for transmitting of the positioning resultant value (i.e., the calculated current location of the SET), the H-SLP transmits a MLP SRLIA message including the location value of the SET to the R-SLP (S53). The R-SLP finally transmits a MLP SLIA message including the location value of the SET to the SUPL agent (S54).

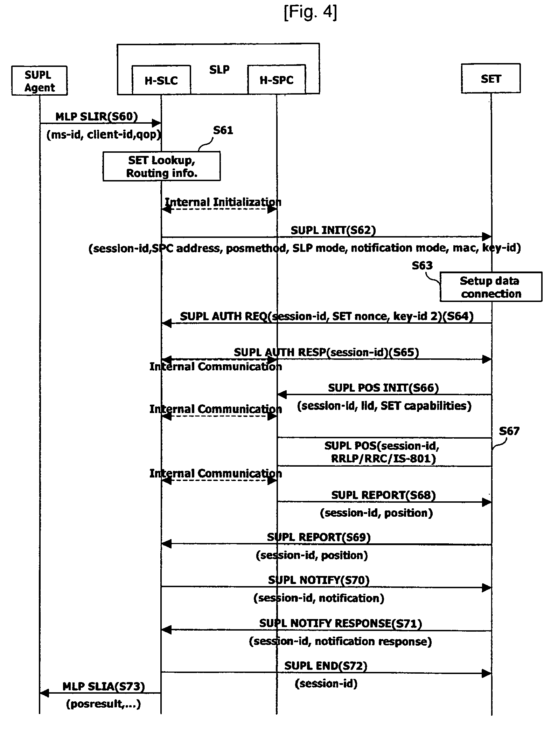

Fig. 4 illustrates a fourth embodiment of a location based notification method in a location information system according to the present invention, which illustrates a case that a terminal is not roaming in a non-proxy mode.

The fourth embodiment of the present invention illustrates a case that the SLP (i.e., Home SLP) is divided into a SUPL Location Center (SLC) and a SUPL Positioning Center (SPC) from its functional perspective to thus perform the positioning process. That is, in the fourth embodiment, the SLP is divided into the SPC for calculating a location of the SET by exchanging messages with the actual SET, and the SLC for performing other functions of the SLP excepting the function for calculating the location information of the SET, so that the SPC performs the positioning process directly with the SET and a information transfer between the SPC and the SLC is performed via an internal communication.

As illustrated in Fig. 4, the SUPL agent transfers the request for positioning of the LCS client to the H-SLC of the SLP through a MLP SLIR message (S60). The MLP SLIR message may include ms-id, lcs-client-id, QoP, and the like.

The H-SLC authorizes the SUPL agent based upon the les-client-id, and performs a subscriber privacy checking for the LCS client based upon the ms-id. The privacy checking, as aforementioned, can be performed by requesting to the PCE or by receiving privacy information from the PCE.

Also, the H-SLC determines whether the SET supports the SUPL using a SET lookup table. If necessary, the H-SLC checks whether the SET is roaming (i.e., whether the SET is currently located within a service area) using routing information (S61). Upon completing such series of operations, the H-SLC can exchange information needed to set a SUPL POS session with the SET through an internal initialization with the H-SPC.

Upon completing the checking of the SUPL agent authentication and the subscriber privacy checking, the H-SLC transmits a SUPL INIT message to the SET to start the SUPL session with the SET (S62). The SUPL INIT message may be a WAP PUSH or an SMS trigger, and include at least session-id, SPC address, positioning methods (posmethod), SLP mode (proxy/non-proxy), a notification mode, mac, key-id, and the like.

When receiving the SUPL UNIT message from the H-SLC of the SLP, the SET is connected to a packet data network (e.g., a 3GPP or 3GPP2 network) when data connection is currently not opened (set) to any network (S63). The SET checks whether SLP uses a proxy or non-proxy mode using the SLP mode to thereafter transmit a SUPL authentication request (i.e., SUPL AUTH REQ) message to the H-SLC (S64). The SUPL AUTH REQ message may include session-id, key-id 2 and SET nonce.

The H-SLC generates a key to be used for an inter-authentication between the SPC and the SET using the key-id 2 and the SET nonce, and transfers the generated key to the H-SPC through an internal communication. The H-SPC then transmits a SUPL authentication response (i.e., SUPL AUTH RESP) message to the SET (S65).

When the SUPL AUTH RESP message is received, the SET estimates (approximates) notification rules to take an appropriate action. The SET checks whether the notification is performed based upon the location of the SET using the notification mode parameter value included in the SUPL INIT message. Further, the SET establishes a secure IP connection to the V-SPC to perform the inter-authentication with the V-SPC.

According to the checked result, when the notification performed by the H-SLP is not based upon the location of the SET, the SET transmits to the H-SPC a SUPL POS INIT message including the notification response of the SET user to start the positioning session with the H-SPC. If the notification is performed based upon the location of the SET, the SET transmits to the H-SPC a SUPL POS INIT message which does not include a notification response to start the positioning session with the H-SPC (S66). The SUPL POS INIT message may include session-id, SET capabilities and location identifier (lid). The SET capabilities may include location measuring (positioning) methods (e.g., MS assisted A-GPS, MS based A-GPS, and cell-id method) and associated location measuring (positioning) protocols (e.g., RRLP, RRC, and TIA-801).

The H-SPC calculates an initial location or a coarse location using the location identifier (lid) and checks whether the corresponding location meets QoP required by the SUPL agent. If the corresponding location meets the QoP required by the SUPL agent, the H-SPC transfers the corresponding location to the H-SLC via the internal communication. The H-SLC accordingly proceeds immediately to the step S73. If the corresponding location does not meet the QoP required by the SUPL agent, the H-SPC determines which positioning protocol (RRLP, RRC, and TIA-801) should be used based upon the SUPL POS INIT message to sequentially exchange several successive positioning procedure message (RRLP, RRC, and TIA-801), thereby performing the SUPL positioning process (S67).

Therefore, the H-SPC or SET calculates the location of the SET through the SUPL positioning process messages for the positioning. The location is calculated based upon measurements that the SLP has received from the SET (MS assisted), or assistance that the SET has obtained from the SLP (MS based).

When the location of the SET is completely calculated, the H-SPC queries to the H-SLC as to whether the notification or verification is performed based upon the location of the SET via the internal communication. When the notification or verification is performed based upon the location of the SET, the H-SPC transmits the calculated location of the SET to the SET through a SUPL reporting (i.e., SUPL REPORT) message (S68).

The SET transmits the received SUPL REPORT message to the H-SLC (S69), and the H-SLC transmits a SUPL NOTIFY message including a notification element to the SET (S70). The SET having received the SUPL NOTIFY message recognizes the notification performed by the H-SLC is based upon location. The SET queries to the SET user as to whether the SET location value should be transmitted and then transmits a notification response of the SET user to the H-SLC through a SUPL NOTIFY RESPONSE message (S71).

Hence, the H-SLC transmits a SUPL END message to the SET to inform that the positioning process is not initiated any more (S72). When the user's notification response included in the SUPL NOTIFY RESPONSE message is set to 'allowed" namely, if the SET user grants permission for transmitting of the positioning resultant value (i.e., the calculated current location of the SET), the H-SLC transmits a MLP SLIA message including the location value of the SET to the SUPL agent (S73).

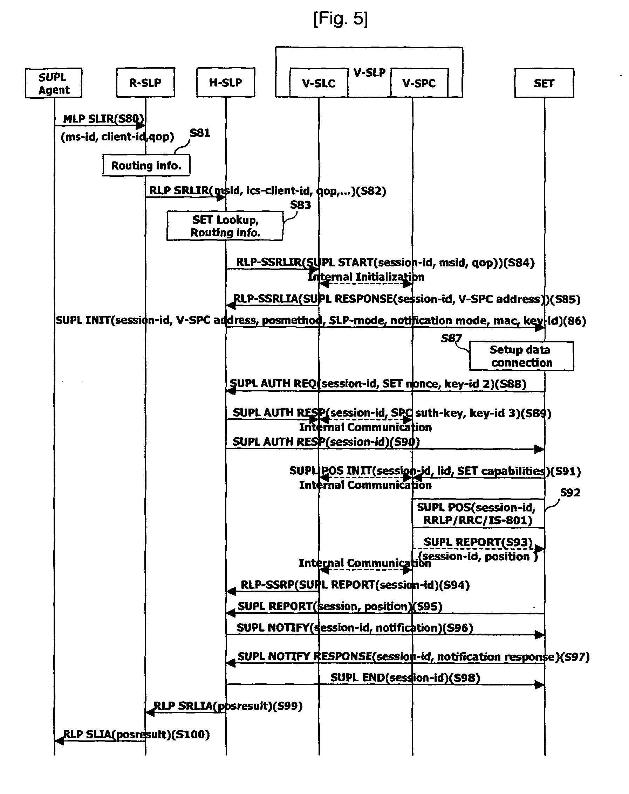

Fig. 5 illustrates a fifth embodiment of a location based notification method in a location information system according to the present invention, which illustrates a case that a terminal is roaming in a non-proxy mode. The fifth embodiment of the present invention shown in Fig. 5 is the same as the fourth embodiment of the present invention excepting those fact that the H-SLP receives the positioning request made by the SUPL agent via the R-SLP, and RLP protocol messages are used such that messages are exchanged between the H-SLP and the V-SLC to thus initiate a SUPL session, transfer positioning session and inform the starting of the SUPL positioning process. Especially, the fifth embodiment of the present invention may be applied when the V-SPC performs positioning with the SET.

As illustrated in Fig. 5, the SUPL agent requests positioning of the LCS client from the R-SLP through a MLP SLIR message (S80). The MLP SLIR message may include ms-id, lcs-client-id, QoP, and the like.

The R-SLP which has received the MLP SLIR message checks whether the SUPL agent is authenticated for location services based upon the les-client-id, and determines a H-SLP based upon the ms-id. The R-SLP also checks whether the SET currently belongs to a service area (i.e., whether the SET is roaming) using routing information (S81). Upon completing such series of operations, the R-SLP transfers the request for the positioning of the LCS client to the H-SLP using a RLP protocol (i.e., RLP SLIR) message (S82).

The H-SLP then performs a privacy checking based on the ms-id and the lcs-client-id. The H-SLP determines whether the SET supports the SUPL using a SET lookup table, and also determines whether the SET currently belongs to a service area (i.e., whether the SET is roaming) using routing information (S83).

According to the result of the determination, when the SET supports the SUPL and is roaming, the H-SLP transmits a RLP-SSRLIR message to a V-SLC to inform that the SET is initiating a SUPL positioning process (S84). Further, when it is identified according to the result of the privacy checking that the notification and verification is performed based upon an actual location of the SET user, upon calculating the location, the H-SLP informs the V-SLC that collaboration is needed between the H-SLP and the V-SLC in order to apply a subscriber privacy with respect to the LCS client.

The V-SLC informs a termination of the SUPL positioning session to the V-SPC via an internal initialization. According to the privacy checking result, when the notification and verification is performed based upon the actual location of the SET user, upon calculating the location, the V-SLC informs the V-SPC that collaboration is needed between the V-SLC and the V-SPC in order to apply a subscriber privacy with respect to the LCS client.

In addition, the V-SLC informs the H-SLP that the SUPL positioning process is ready to be initiated through a RLP-SSRLIA message (S85). The RLP-SSRLIR message may include at least session-id, ms-id and QoP, while the RLP-SSRLIA message may include at least session-id and V-SPC address.

Thus, the H-SLP transmits a SUPL INIT message to the SET to start the positioning session with the SET (S86). The SUPL INIT message may be a WAP PUSH or an SMS trigger, and include at least session-id, V-SPC address, positioning methods (posmethod), SLP mode (proxy/non-proxy), a notification mode, mac, key-id, and the like.

When the SUPL INIT message is received from the H-SLP, the SET is connected to a packet data network (e.g., a 3GPP or 3GPP2 network) when data connection is currently not opened (set) to any network (S87). The SET checks whether the H-SLP uses a proxy or non-proxy mode using the SLP mode to thereafter transmit a SUPL AUTH REQ message to the H-SLP (S88). The SUPL AUTH REQ message may include session-id, key-id 2 and SET nonce.

The H-SLP generates a key to be used for an inter-authentication between the H-SPC and the SET using the key-id 2 and the SET nonce, and transfers the generated key to the V-SLC through the internal communication (89). The V-SLC then transfer the generated key to the V-SPC through the internal communication. The H-SLP also transmits a SUPL AUTH RESP message to the SET (S90).

When receiving the SUPL AUTH RESP message from the H-SLP, the SET estimates (approximates) notification rules to take an appropriate action. The SET checks whether the notification is performed based upon the location of the SET using the notification mode parameter value included in the SUPL INIT message. Further, the SET establishes a secure IP connection to the V-SPC to perform the inter-authentication with the V-SPC.

According to the checked result, when the notification is not performed based upon the location of the SET, the SET transmits to the V-SPC a SUPL POS INIT message including the notification response of the SET user to start the positioning session. If the notification is performed based upon the location of the SET, the SET transmits to the V-SPC a SUPL POS INIT message which does not include a notification response to start the positioning session with the V-SPC (S91). The SUPL POS INIT message may include at least session-id, location identifier (lid) and SET capabilities.

When the SUPL POS INIT message is received from the SET, the V-SPC informs the V-SLC that the positioning process is initiated through the internal communication, and determines which positioning protocol (RRLP, RRC, and T1A-801) should be used based upon the positioning method (posmethod) included in the SUPL POS INIT message.

Therefore, the V-SPC and the SET sequentially exchange several successive positioning procedure message (RRLP, RRC, and T1A-801) to calculate the location of the SET (S92). The location is calculated based upon measurements that the V-SPC has received from the SET (MS assisted), or assistance that the SET has obtained from the V-SPC (MS based).

When completely calculating the location of the SET, when the V-SLC indicates that the notification or verification is performed based upon the location of the SET via the internal initialization after the step S84, the V-SPC transmits the calculated location value of the SET to the SET through a SUPL REPORT message (S93), thus to inform the end of the positioning to the V-SLC. Accordingly, the V-SLC checks in the step S84 whether the H-SLP has indicated that the notification or verification is performed based upon the location of the SET. If so, the V-SLC transmits a RLP-SSRP message to the H-SLP to inform that the positioning is terminated (ended) (S94).

The SET transmits the SUPL REPORT message received from the V-SPC to the H-SLP (S95). The H-SLP then transmits a SUPL NOTIFY message including a notification element to the SET (S96). The SET which has received the SUPL NOTIFY message recognizes that the notification performed by the H-SLP is based upon the location. The SET then queries to the SET user as to whether the location value of the SET should be transmitted, and then transmits a notification response of the SET user to the H-SLP through a SUPL NOTIFY RESPONSE message (S97).

Thus, the H-SLP transmit a SUPL END message to the SET to inform that the positioning process is not initiated any more (S98). When the user's notification response included in the SUPL NOTIFY RESPONSE message is set to "allowed" namely, if the SET user grants permission for transmitting of the positioning resultant value (i.e., the calculated current location of the SET), the H-SLP transmits a MLP SRLIA message including the location value of the SET to the R-SLP (S99). The R-SLP finally transmits a MLP SLIA message including the location value of the SET to the SUPL agent (S 100).

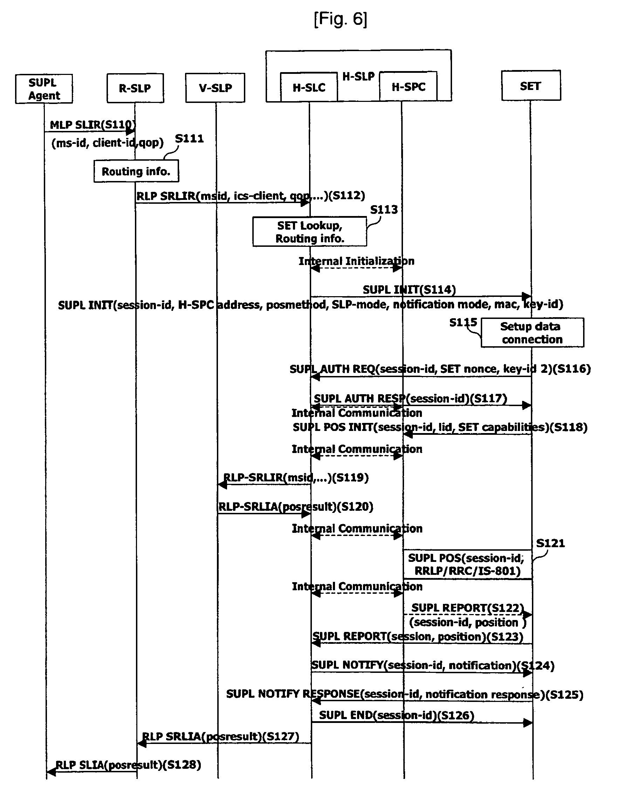

Fig. 6 illustrates a sixth embodiment of a location based notification method in a location information system according to the present invention, which illustrates a case that a terminal is roaming in a non-proxy mode. The sixth embodiment of the present invention is the same as the fifth embodiment of the present invention excepting that the H-SPC performs positioning with the SET.

First, the SUPL agent transfers a request for positioning of the LCS client to the R-SLP through a MLP SLIR message (S110). The R-SLP checks whether the SUPL agent is authenticated for location service based upon the lcs-client-id, and determines a H-SLP based upon the ms-id. The MLP SLIR message may include ms-id, lcs-client-id, QoP, and the like. The R-SLP also checks whether the SET is currently located within a service area (i.e., whether the SET is roaming) using routing information (S111).

Upon completing such series of operations, the R-SLP transfers the request for the positioning of the LCS client through a RLP protocol (RLP SLIR) message (S112). The H-SLC performs a privacy checking based upon the ms-id and the lcs-client-id, and determines whether the SET supports the SUPL using a SET lookup table. The H-SLC also determines whether the SET is currently located within a service area (i.e., whether the SET is roaming) using routing information (S113). Further, the H-SLC informs the H-SPC of a (pending) SUPL positioning session through an internal initialization.

According to the determination, when the SET supports the SUPL and is roaming, the H-SLC transmits a SUPL INIT message to the SET to start the positioning session with the SET (S114). The SUPL INIT message may be a WAP PUSH or an SMS trigger, and include at least session-id, H-SPC address, positioning methods (posmethod), SLP mode (proxy/non-proxy), a notification mode, mac, key-id, and the like.

When the SUPL INIT message is received from the H-SLP, the SET is connected to a packet data network (e.g., a 3GPP or 3GPP2 network) when data connection is currently not opened (set) to any network (S 115). The SET checks whether the SLP uses a proxy or non-proxy mode using the SLP mode to thereafter transmit a SUPL AUTH REQ message to the H-SLC (S116). The SUPL AUTH REQ message may include session-id, key-id 2 and SET nonce.

The H-SLC generates a key to be used for an inter-authentication between the H-SPC and the SET using the key-id 2 and the SET nonce, and transfers the generated key to the H-SPC through the internal communication (89). The H-SLC also transmits a SUPL AUTH RESP message to the SET (S117).

When receiving the SUPL AUTH RESP message from the H-SLC, the SET estimates (approximates) notification rules to take an appropriate action. The SET checks whether the notification is performed based upon the location of the SET using the notification mode parameter value included in the SUPL INIT message. Further, the SET establishes a secure IP connection to the H-SPC to perform the inter-authentication with the H-SPC.

According to the checked result, when the notification performed by the H-SLC is not based upon the location of the SET, the SET transmits to the H-SPC a SUPL POS INIT message included in the notification response of the SET user to start the positioning session. If the notification is performed based upon the location of the SET, the SET transmits to the H-SPC a SUPL POS INIT message which does not include a notification response to start the positioning session with the H-SPC (S118). The SUPL POS INIT message may include session-id, location identifier (lid) and SET capabilities.

When the SUPL POS INIT message is received from the SET, the H-SPC informs the H-SLC that the positioning process is initiated through the internal communication. The H-SLC transfers to the V-SLP a RLP-SRLIR message which includes the ms-id and the location identifier (lid) so as to allow the V-SLP to calculate a coarse location of the SET (S 119). The V-SLP calculates the coarse location of the SET using the lid to transfer it to the H-SLC through a RLP SRLIA message (S120).

The H-SLC informs the H-SPC of the coarse location of the SET through the internal communication. If the coarse location of the SET meets the QoP required by the client, the H-SPC proceeds to the step of S 122. Conversely, if the coarse location of the SET does not meet the QoP required by the client, the H-SPC determines which positioning protocol (RRLP, RRC, and T1A-801) should be used based upon the positioning method (i.e., posmethod) supported by the SET.

Therefore, the H-SPC and the SET sequentially exchange several successive positioning procedure message (RRLP, RRC, and T1A-801) to calculate the location of the SET (S121). The location is calculated based upon measurements that the H-SPC has received from the SET (MS assisted), or assistance that the SET has obtained from the V-SPC (MS based).

When completely calculating the location of the SET, the H-SPC queries through the step S114 whether the H-SLC has indicated that the notification or verification is performed based upon the location of the SET. If the H-SLC has indicated that the notification or verification is performed based upon the location of the SET, the H-SPC transmits the calculated location value of the SET to the SET through a SUPL REPORT message (S122).

The SET transmits the SUPL REPORT message received from the H-SPC to the H-SLC (S123). The H-SLC then transmits a SUPL NOTIFY message including a notification element to the SET (S124). The SET which has received the SUPL NOTIFY message recognizes that the notification performed by the H-SLC is based upon the location. The SET then queries to the SET user as to whether the location value of the SET should be transmitted, and then transmits a notification response of the SET user to the H-SLC through a SUPL NOTIFY RESPONSE message (S 125).

Thus, the H-SLC transmit a SUPL END message to the SET to inform that the positioning process is not initiated any more (S126). When the user's notification response included in the SUPL NOTIFY RESPONSE message is set to "allowed" namely, if the SET user grants permission for transmitting of the positioning resultant value (i.e., the calculated current location of the SET), the H-SLC transmits a MLP SRLIA message including the location value of the SET to the R-SLP (S127). The R-SLP finally transmits a MLP SLIA message including the location value of the SET to the SUPL agent (S 128).

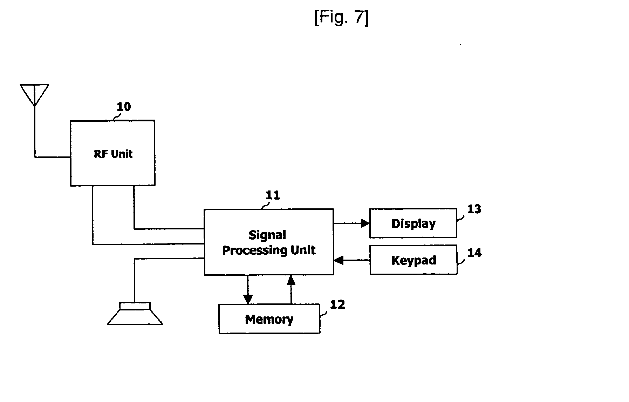

Fig. 7 illustrates a schematic structure of a mobile communications terminal which is applied to a location information system according to the present invention.

As illustrated in Fig. 7, a Radio Frequency (RF) unit 10 is provided with a transmitter and a receiver, thus to receive various messages transmitted from a location server via an antenna, such as a session initial message including a notification mode parameter (indicator), or to receive a session notification message from the location server after positioning, and to transmit a user's notification response for the session notification message to the location server. Also, the RF unit 10 transmits and receives various messages for performing positioning between the location server and a terminal (e.g., SET).

A signal processing unit 11 which includes a processor checks the received notification mode parameter to thus determine whether the notification is performed by the location server based upon a location of the terminal. According to the checked result, when the notification mode parameter is a notification/verification based upon location, the terminal does not transmit a session end message until receiving the session notification message. That is, when the notification is performed based upon the location of the terminal, the signal processing unit 11 receives the session notification message from the location server. The signal processing unit 11 accordingly informs a terminal user of the reception of the session notification message by use of a display 13 and transmits a notification response of the terminal user inputted by means of a keypad 14 to the location server via the RF unit 10. Such operations implementing the present invention and their results are stored in a memory 12.

In addition, the SET adapted in the present invention may denote a device which is capable of communicating with a SUPL network which uses a SUPL interface. For example, the SET may be one of UE (User Equipment) of UMTS, Mobile Station (MS) of GSM, IS-95 MS or laptop computers or PDAs having a SET function therein. Further, the SET denotes a variety of mobile terminals which are connected through a WLAN, which is referred to as a terminal in the present invention.

As described above, in the present invention, when an application (i.e., a server system) notifies a SET (or a SET user) of positioning of the SET requested by a third party (i.e., a client system), the SET can be informed as to whether the corresponding notification is performed based upon location, thus to determine a time point of a notification response, resulting in stabilization of the system.

Reference will now be made in detail to the preferred embodiments of the present invention, examples of which are illustrated in the accompanying drawings. It will also be apparent to those skilled in the art that various modifications and variations can be made in the present invention without departing from the scope of the invention. Thus, it is intended that the present invention cover modifications and variations of this invention provided they come within the scope of the appended claims and their equivalents.

## Claims

1. A location based notification method for calculating a location of a terminal by exchanging messages between a location server and the terminal according to a client's request, the location based notification method comprising:
receiving (S12, S26, S44, S62, S86, S114), by the terminal, a SUPL INIT message from the location server, the SUPL INIT message including a notification mode parameter,
wherein the notification mode parameter indicates whether a notification is to be performed based on a location of the terminal, and
wherein the notification mode parameter allows the terminal to determine whether the notification is performed based on the location of the terminal;
checking, by the terminal, the received notification mode parameter to determine whether the notification is to be performed based on the location of the terminal;
starting (S14, S28, S46, S66, S91, S118), by the terminal, a positioning session with the location server in order to obtain the calculated location information of the terminal;
sending (S 17, S34, S51, S71, S97, S125), by the terminal, a SUPL NOTIFY RESPONSE message to the location server in response to a SUPL NOTIFY message received from the location server, if the notification mode parameter indicates that the notification is to be performed based on the location of the terminal.

2. The location based notification method of claim 1, further comprising:
before a releasing step, receiving (S18, S35, S52, S72, S98, S126) a session end message after receiving the SUPL NOTIFY message when the notification mode parameter indicates that the notification is to be performed based on the location of the terminal.

3. The location based notification method of claim 1, wherein the SUPL NOTIFY message includes a notification element requesting the response indicating whether or not the provision of the calculated position information of the terminal to the client is allowed.

4. The location based notification method of claim 1, wherein the location server is a home SUPL Location Platform (H-SLP) in case of a proxy mode.

5. The location based notification method of claim 1, wherein the location server is a SUPL Location Center (H-SLC) in case where the terminal is not roaming in a non-proxy mode.

6. The location based notification method of claim 1, wherein in case where the terminal is roaming in a non-proxy mode, the location server is H-SLP when a V-SPC performs positioning with the terminal, and is the H-SLC when a H-SPC performs the positioning with the terminal.

7. A mobile communications terminal for providing location information in response to a client's request, the mobile communications terminal comprising:
a radio frequency unit (10) configured to receive, by a terminal, from a location server a SUPL INIT message including a notification mode parameter,
wherein the notification mode parameter indicates whether a notification is to be performed based on a location of the terminal, and
wherein the notification mode parameter allows the terminal to determine whether the notification is performed based on the location of the terminal; and
a signal processing unit (11) configured to check, by the terminal, the received notification mode parameter to determine whether the notification is to be performed based on the location of the terminal,
wherein the radio frequency unit (10) and the signal processing unit (11) further cooperate to start a positioning session with the location server in order to obtain the calculated location information of the terminal, to send a SUPL NOTIFY RESPONSE message to the location server in response to a SUPL NOTIFY message received from the location server if the notification mode parameter indicates that the notification is to be performed based on the location of the terminal.

8. The mobile communications terminal of claim 7, the radio frequency unit further configured to receive a session end message after receiving the second SUPL NOTIFY message when the notification mode parameter indicates that the notification is to be performed based on the location of the terminal.

9. The location based notification method of claim 1, wherein the SUPL NOTIFY message is received from the location server after the starting step is performed.

## Patentansprüche

1. Benachrichtigungsverfahren auf Ortsbasis zum Berechnen eines Orts eines Endgeräts durch Austauschen von Nachrichten zwischen einem Ortungsserver und dem Endgerät gemäß der Anforderung eines Client, wobei das Benachrichtigungsverfahren auf Ortsbasis umfasst:
Empfangen (S12, S26, S44, S62, S86, S114) einer Nachricht SUPL INIT vom Ortungsserver durch das Endgerät, wobei die Nachricht SUPL INIT einen Benachrichtigungsmodusparameter umfasst,
wobei der Benachrichtigungsmodusparameter angibt, ob eine Benachrichtigung auf der Basis eines Orts des Endgeräts durchgeführt werden soll, und
wobei der Benachrichtigungsmodusparameter ermöglicht, dass das Endgerät bestimmt, ob die Benachrichtigung auf der Basis des Orts des Endgeräts durchgeführt wird;
Prüfen des empfangenen Benachrichtigungsmodusparameters durch das Endgerät, um zu bestimmen, ob die Benachrichtigung auf der Basis des Orts des Endgeräts durchgeführt werden soll;
Starten (S 14, S28, S46, S66, 591, S 118) einer Positionsbestimmungssitzung mit dem Ortungsserver durch das Endgerät, um die berechneten Ortsinformationen des Endgeräts zu erhalten;
Senden (S17, S34, S51, S71, S97, S125) einer Nachricht SUPL NOTIFY RESPONSE durch das Endgerät zum Ortungsserver in Reaktion auf eine vom Ortungsserver empfangene Nachricht SUPL NOTIFY, wenn der Benachrichtigungsmodusparameter angibt, dass die Benachrichtigung auf der Basis des Orts des Endgeräts durchgeführt werden soll.

2. Benachrichtigungsverfahren auf Ortsbassis nach Anspruch 1, das ferner umfasst:
vor einem Freigabeschritt Empfangen (S18, S35, S52, S72, S98, S126) einer Sitzungsendnachricht nach dem Empfangen der Nachricht SUPL NOTIFY, wenn der Benachrichtigungsmodusparameter angibt, dass die Benachrichtigung auf der Basis des Orts des Endgeräts durchgeführt werden soll.

3. Benachrichtigungsverfahren auf Ortsbasis nach Anspruch 1, wobei die Nachricht SUPL NOTIFY ein Benachrichtigungselement umfasst, das die Antwort anfordert, die angibt, ob die Lieferung der berechneten Positionsinformationen des Endgeräts an den Client zugelassen ist oder nicht.

4. Benachrichtigungsverfahren auf Ortsbasis nach Anspruch 1, wobei der Ortungsserver eine Home SUPL Location Platform (H-SLP) im Fall eines Proxymodus ist.

5. Benachrichtigungsverfahren auf Ortsbasis nach Anspruch 1, wobei der Ortungsserver ein SUPL Location Center (H-SLC) in dem Fall ist, in dem das Endgerät nicht in einem Nicht-Proxy-Modus wandert.

6. Benachrichtigungsverfahren auf Ortsbasis nach Anspruch 1, wobei in dem Fall, in dem das Endgerät in einem Nicht-Proxy-Modus wandert, der Ortungsserver H-SLP ist, wenn ein V-SPC eine Positionsbestimmung mit dem Endgerät durchführt, und H-SLC ist, wenn ein H-SPC die Positionsbestimmung mit dem Endgerät durchführt.

7. Mobilkommunikationsendgerät zum Liefern von Ortsinformationen in Reaktion auf die Anforderung eines Client, wobei das Mobilkommunikationsendgerät umfasst:
eine Hochfrequenzeinheit (10), die dazu konfiguriert ist, durch ein Endgerät von einem Ortungsserver eine Nachricht SUPL INIT mit einem Benachrichtigungsmodusparameter zu empfangen,
wobei der Benachrichtigungsmodusparameter angibt, ob eine Benachrichtigung auf der Basis eines Orts des Endgeräts durchgeführt werden soll, und
wobei der Benachrichtigungsmodusparameter ermöglicht, dass das Endgerät bestimmt, ob die Benachrichtigung auf der Basis des Orts des Endgeräts durchgeführt wird; und
eine Signalverarbeitungseinheit (11), die dazu konfiguriert ist, durch das Endgerät den empfangenen Benachrichtigungsmodusparameter zu prüfen, um zu bestimmen, ob die Benachrichtigung auf der Basis des Orts des Endgeräts durchgeführt werden soll,
wobei die Hochfrequenzeinheit (10) und die Signalverarbeitungseinheit (11) ferner zusammenarbeiten, um eine Positionsbestimmungssitzung mit dem Ortungsserver zu starten, um die berechneten Ortsinformationen des Endgeräts zu erhalten, um eine Nachricht SUPL NOTIFY RESPONSE zum Ortungsserver in Reaktion auf eine vom Ortungsserver empfangene Nachricht SUPL NOTIFY zu senden, wenn der Benachrichtigungsmodusparameter angibt, dass die Benachrichtigung auf der Basis des Orts des Endgeräts durchgeführt werden soll.

8. Mobilkommunikationsendgerät nach Anspruch 7, wobei die Hochfrequenzeinheit ferner dazu konfiguriert ist, eine Sitzungsendnachricht nach dem Empfangen der zweiten Nachricht SUPL NOTIFY zu empfangen, wenn der Benachrichtigungsmodusparameter angibt, dass die Benachrichtigung auf der Basis des Orts des Endgeräts durchgeführt werden soll.

9. Benachrichtigungsverfahren auf Ortsbasis nach Anspruch 1, wobei die Nachricht SUPL NOTIFY vom Ortungsserver empfangen wird, nachdem der Startschritt durchgeführt ist.

## Revendications

1. Procédé de notification basée sur la localisation destiné à calculer une localisation d'un terminal en échangeant des messages entre un serveur de localisation et le terminal en fonction d'une demande d'un client, le procédé de notification basée sur la localisation comprenant :
la réception (S12, S26, S44, S62, S86, S114), par le terminal, d'un message SUPL INIT en provenance du serveur de localisation, le message SUPL INIT comprenant un paramètre de mode de notification, dans lequel le paramètre de mode de notification indique si une notification doit être effectuée sur la base d'une localisation du terminal, et
dans lequel le paramètre de mode de notification permet au terminal de déterminer si la notification est effectuée sur la base de la localisation du terminal ;
l'examen, par le terminal, du paramètre de mode de notification reçu pour déterminer si la notification doit être effectuée sur la base de la localisation du terminal ;
le démarrage (S14, S28, S46, S66, S91, S118), par le terminal, d'une session de positionnement avec le serveur de localisation afin d'obtenir les informations de localisation calculées du terminal ;
l'envoi (S17, S34, S51, S71, S97, S125), par le terminal, d'un message SUPL NOTIFY RESPONSE au serveur de localisation en réponse à un message SUPL NOTIFY reçu en provenance du serveur de localisation, si le paramètre de mode de notification indique que la notification doit être effectuée sur la base de la localisation du terminal.

2. Procédé de notification sur la base de la localisation selon la revendication 1, comprenant en outre :
avant une étape de libération, la réception (S18, S35, S52, S72, S98, S126) d'un message de fin de session après la réception du message SUPL NOTIFY lorsque le paramètre de mode de notification indique que la notification doit être effectuée sur la base de la localisation du terminal.

3. Procédé de notification sur la base de la localisation selon la revendication 1, dans lequel le message SUPL NOTIFY comprend un élément de notification demandant la réponse indiquant s'il est autorisé de fournir les informations de position calculées du terminal au client.

4. Procédé de notification sur la base de la localisation selon la revendication 1, dans lequel le serveur de localisation est une plate-forme de localisation SUPL domestique (H-SLP) dans le cas d'un mode proxy.

5. Procédé de notification sur la base de la localisation selon la revendication 1, dans lequel le serveur de localisation est un centre de localisation SUPL (H-SLC) dans le cas où le terminal n'est pas en itinérance dans un mode non proxy.

6. Procédé de notification sur la base de la localisation selon la revendication 1, dans lequel, dans le cas où le terminal est en itinérance dans un mode non proxy, le serveur de localisation est H-SLP lorsqu'un V-SPC effectue un positionnement avec le terminal, et est le H-SLC lorsqu'un H-SPC effectue le positionnement avec le terminal.

7. Terminal de communication mobile pour fournir des informations de localisation en réponse à une demande d'un client, le terminal de communication mobile comprenant :
une unité de radiofréquence (10) configurée pour effectuer la réception, par un terminal, en provenance d'un serveur de localisation, d'un message SUPL INIT comprenant un paramètre de mode de notification,
dans lequel le paramètre de mode de notification indique si une notification doit être effectuée sur la base d'une localisation du terminal, et
dans lequel le paramètre de mode de notification permet au terminal de déterminer si la notification est effectuée sur la base de la localisation du terminal ; et
une unité de traitement de signal (11) configurée pour effectuer l'examen, par le terminal, du paramètre de mode de notification reçu pour déterminer si la notification doit être effectuée sur la base de la localisation du terminal ;
dans lequel l'unité de radiofréquence (10) et l'unité de traitement de signal (11) coopèrent en outre pour effectuer le démarrage d'une session de positionnement avec le serveur de localisation afin d'obtenir les informations de localisation calculées du terminal, l'envoi d'un message SUPL NOTIFY RESPONSE au serveur de localisation en réponse à un message SUPL NOTIFY reçu en provenance du serveur de localisation, si le paramètre de mode de notification indique que la notification doit être effectuée sur la base de la localisation du terminal.

8. Terminal de communication mobile selon la revendication 7, dans lequel l'unité de radiofréquence est en outre configurée pour effectuer la réception d'un message de fin de session après la réception du deuxième message SUPL NOTIFY lorsque le paramètre de mode de notification indique que la notification doit être effectuée sur la base de la localisation du terminal.

9. Procédé de notification sur la base de la localisation selon la revendication 1, dans lequel le message SUPL NOTIFY est reçu en provenance du serveur de localisation après l'exécution de l'étape de démarrage.
